(19) Europäisches Patentamt
European Patent Office
Office européen des brevets

(11) **EP 4 180 391 A1**

(12) **EUROPEAN PATENT APPLICATION**
published in accordance with Art. 153(4) EPC

(43) Date of publication:
**17.05.2023  Bulletin 2023/20**

(51) International Patent Classification (IPC):
*C01B 25/14* (2006.01)     *H01M 10/0562* (2010.01)
*H01B 13/00* (2006.01)     *H01M 6/18* (2006.01)

(21) Application number: **21838268.7**

(52) Cooperative Patent Classification (CPC):
**C01B 25/14; H01B 13/00; H01M 6/18;**
**H01M 10/0562;** Y02E 60/10

(22) Date of filing: **23.06.2021**

(86) International application number:
**PCT/JP2021/023764**

(87) International publication number:
**WO 2022/009679 (13.01.2022 Gazette 2022/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.07.2020  JP 2020119461**
**07.01.2021  JP 2021001698**

(71) Applicant: **Mitsubishi Materials Corporation**
**Tokyo 100-8117 (JP)**

(72) Inventors:
• **SHIMIZU, Sho**
**Naka-shi, Ibaraki 311-0102 (JP)**
• **KUBA, Kanji**
**Naka-shi, Ibaraki 311-0102 (JP)**

(74) Representative: **Gille Hrabal**
**Partnerschaftsgesellschaft mbB**
**Patentanwälte**
**Brucknerstraße 20**
**40593 Düsseldorf (DE)**

(54) **METHOD FOR PRODUCING SOLID ELECTROLYTE MEMBER**

(57)     In production of a solid electrolyte member, the amount or kinds of sulfides used as raw materials are reduced. A method of producing a solid electrolyte member is a method of producing a solid electrolyte member based on sulfide, the method including: a preparation step (S10) of preparing an aggregate of starting materials, in which the starting materials include elemental sulfur, and a non-sulfide raw material that is at least one of an element as an elemental substance other than sulfur that constitutes the solid electrolyte member, and a compound of elements other than sulfur that constitute the solid electrolyte member; and a forming step (S12) of heating the aggregate of starting materials to form the solid electrolyte member. The non-sulfide raw material contains no elements other than elements except sulfur that constitute the solid electrolyte member, except inevitable impurities.

FIG.1

START

AGGREGATE OF STARTING MATERIALS IS PREPARED (PREPARATION STEP)  ~S10

AGGREGATE OF STARTING MATERIALS IS HEATED TO FORM SOLID ELECTROLYTE MEMBER (FORMING STEP)  ~S12

END

EP 4 180 391 A1

**Description**

Field

The present invention relates to a method of producing a solid electrolyte member.

Background

Sulfide-based solid electrolytes are known as solid electrolytes for lithium batteries. Patent Literature 1 describes the production of a sulfide-based solid electrolyte member using elemental sulfur or a sulfur compound and a sulfide such as $Li_2S$ and $P_2S_5$ as starting materials.

Citation List

Patent Literature

Patent Literature 1: Japanese Patent Application Laid-open No. 2020-27715

Summary

Technical Problem

However, sulfides such as $Li_2S$ and $P_2S_5$ react with moisture in the air to produce hydrogen sulfide. Sulfides therefore are difficult to handle and store, and require special facilities for storage. For this reason, there is room for improvement in production of solid electrolyte members, and there is a demand for reducing the amount or kinds of sulfides used as raw materials in the production of solid electrolyte members.
The present invention is made in view of the above, and an object of the present invention is to provide a method of producing a solid electrolyte member in which the amount or kinds of sulfides used as raw materials can be reduced in production of the solid electrolyte member. Solution to Problem
To solve the problem above, a method of producing a solid electrolyte member based on sulfide of the present disclosure comprises: a preparation step of preparing an aggregate of starting materials, the starting materials including elemental sulfur, and a non-sulfide raw material that is at least one of an element as an elemental substance other than sulfur that constitutes the solid electrolyte member, and a compound of elements other than sulfur that constitute the solid electrolyte member; and a forming step of heating the aggregate of starting materials to form the solid electrolyte member, wherein the non-sulfide raw material contains no elements other than elements except sulfur that constitute the solid electrolyte member, except inevitable impurities.

Advantageous Effects of Invention

According to the present invention, the amount or kinds of sulfides used as raw materials can be reduced in production of the solid electrolyte member.

Brief Description of Drawings

FIG. 1 is a flowchart illustrating a method of producing a solid electrolyte member according to the present embodiment.
FIG. 2 is a schematic diagram of a facility for forming the solid electrolyte member.

Description of Embodiments

The present invention will be described in detail below with reference to the drawings. The present invention is not limited by modes for carrying out the following invention (hereinafter referred to as "embodiments"). The constituent elements in the following embodiments include those easily conceivable by those skilled in the art, those substantially identical, and those in the range of equivalents. Furthermore, the constituent elements disclosed in the following embodiments can be combined as appropriate.

(First Embodiment)

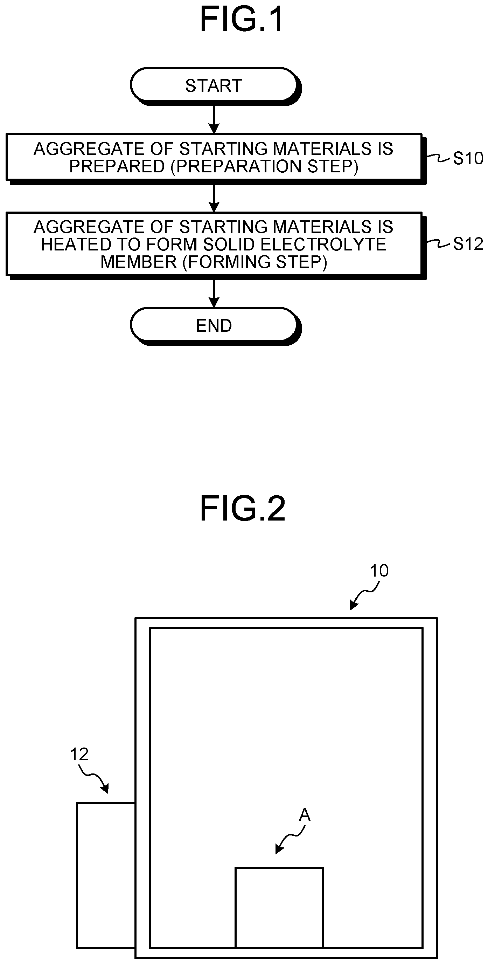

FIG. 1 is a flowchart illustrating a method of producing a solid electrolyte member according to the present embodiment. The solid electrolyte member produced in the present embodiment is a sulfide-based solid electrolyte. The solid electrolyte member according to the present embodiment is used, for example, in lithium batteries. More specifically, the solid electrolyte member according to the present embodiment is represented by a chemical formula $Li_aM_bP_cS_d$. Herein, a, b, c, and d are numbers greater than 0.

Element M is at least one element of groups 13, 14, and 15. In the present embodiment, element M is preferably at least one of Si, Ge, and Sn. The solid electrolyte member according to the present embodiment contains one kind of element M, but may contain different kinds of elements M. In this way, the solid electrolyte member according to the present embodiment is a solid electrolyte containing lithium, element M, phosphorus, and sulfur, but not limited to this, and may be a sulfide-based solid electrolyte containing components other than lithium, element M, and phosphorus.

As illustrated in FIG. 1, in the production method of the present embodiment, at a preparation step, an aggregate of starting materials A of the solid electrolyte member is first prepared (step S10; preparation step).

The starting materials A are raw materials containing elements that constitute the solid electrolyte member. As used herein an aggregate of starting materials A refers to powders of raw materials mixed (stirred) without involving any chemical change of the raw materials (the starting materials A). Herein, it is preferable that the raw materials are mixed homogeneously. In this way, a starting material A refers to one kind of raw material, and an aggregate of starting materials A refers to a set in which starting materials A are mixed. An aggregate of starting materials A is not an intermediate product formed during the process of forming the solid electrolyte member but refers to a set of raw materials in a state before starting the process of forming the solid electrolyte member. More specifically, as used herein an aggregate of starting materials A refers to raw materials in a state before they are placed in a furnace 10 described later.

In the present production method, elemental sulfur, a non-sulfide raw material, and a sulfide raw material are the raw materials that constitute the starting materials A. However, the sulfide raw material is not essential as a raw material that constitutes the starting materials A.

(Elemental Sulfur)

The elemental sulfur refers to sulfur that contains no elements other than sulfur except inevitable impurities. In the following, each raw material may contain inevitable impurities, unless otherwise specified.

(Non-Sulfide Raw Material)

The non-sulfide raw material is at least one of an element as an elemental substance other than sulfur that constitutes the solid electrolyte member, and a compound of elements other than sulfur that constitute the solid electrolyte member. The non-sulfide raw material contains no elements other than elements except sulfur that constitute the solid electrolyte member. In other words, in the present embodiment, the non-sulfide raw material refers to at least one of elemental lithium, element M as an elemental substance, phosphorus as an elemental substance, and a compound made of at least two of lithium, element M, and phosphorus, and contains no elements other than lithium, element M, and phosphorus, except inevitable impurities. When there are different kinds of elements M, each element M as an elemental substance may be prepared, or a compound of elements M or a solid solution of elements M (a Si-Ge solid solution, a Si-Sn solid solution, a Ge-Sn solid solution, etc.) may be prepared. Examples of the compound made of at least two of lithium, element M, and phosphorus include compounds of lithium and element M (e.g., $Li_{22}Si_5$, $Li_{17}Ge_4$, $Li_{17}Sn_4$, etc.), compounds of lithium and phosphorus (e.g., $Li_3P$), compounds of element M and phosphorus (e.g., SiP, GeP, $Sn_3P_4$, etc.), and compounds of lithium, element M, and phosphorus (e.g., $Li_5SiP_3$, $Li_5GeP_3$, $Li_5SnP_3$, etc.).

The non-sulfide raw material contains no elements different from the element other than sulfur that constitutes the solid electrolyte member (herein, lithium, element M, and phosphorus), except inevitable impurities, and therefore is not a compound with other elements, such as sulfide, oxide, hydroxide, nitride, carbide, carbonate, or sulfate.

In the present production method, different kinds of non-sulfide raw materials with different compositions may be prepared, or a single kind of non-sulfide raw material may be prepared.

(Sulfide Raw Material)

When an aggregate of starting materials A is prepared at the preparation step, a sulfide raw material may be mixed in addition to the elemental sulfur and the non-sulfide raw material. The sulfide raw material is a sulfide of an element other than sulfur and the elements contained in the non-sulfide raw material, among the elements that constitute the solid electrolyte member (herein, lithium, element M, phosphorus, and sulfur). In other words, for example, when the non-sulfide raw material contains lithium and element M and does not contain phosphorus, the sulfide raw material is a sulfide of phosphorus (phosphorus sulfide).

In the present embodiment, when the non-sulfide raw material contains all the elements other than sulfur that constitute the solid electrolyte member, it is preferable to form an aggregate of starting materials A using only the non-sulfide raw material and the elemental sulfur, without including the sulfide raw material, at the mixing step. In other words, in this case, it is preferable that only the non-sulfide raw material and the elemental sulfur are used as starting materials A.

In the present embodiment, when the non-sulfide raw material does not contain all of the elements other than sulfur that constitute the solid electrolyte member, it is preferable that a sulfide of any missing element (an element that is not contained in the non-sulfide raw material, among all of the elements other than sulfur that constitute the solid electrolyte member) is mixed as the sulfide raw material with the non-sulfide raw material and the elemental sulfur. In other words, in this case, it is preferable that the non-sulfide raw material, the elemental sulfur, and the sulfide raw material are used as starting materials A.

(Li Raw Material, M Raw Material, P Raw Material, S Raw Material)

Since the starting materials A are raw materials containing elements that constitute the solid electrolyte member, it can be said that in the present embodiment the starting materials A include a Li raw material containing lithium, an M raw material containing element M, a P raw material containing phosphorus, and a S raw material containing sulfur. Thus, in other words, the elemental sulfur is the S raw material, and the non-sulfide raw material and the sulfide raw material are the Li raw material, the M raw material, and the P raw material.

(Li Raw Material)

The Li raw material may be the non-sulfide raw material or the sulfide raw material. When the Li raw material is the non-sulfide raw material, the Li raw material is at least one of elemental lithium, a compound of lithium and element M, a compound of lithium and phosphorus, and a compound of lithium, element M, and phosphorus. When the Li raw material is the sulfide raw material, the Li raw material is at least one of a compound of lithium and sulfur (lithium sulfide), a compound of lithium, element M, and sulfur (e.g., $Li_4SiS_4$, $Li_4GeS_4$, $Li_4SnS_4$, etc.), a compound of lithium, phosphorus, and sulfur (e.g., $Li_3PS_4$), and a compound of lithium, elemental M, phosphorus, and sulfur. When the Li raw material is a compound of lithium and another element, the Li raw material also serves as a raw material of the other element. For example, when the Li raw material is a compound of lithium and phosphorus, it can be said that the compound of lithium and phosphorus is the Li raw material and the P raw material.

(M Raw Material)

The M raw material may be the non-sulfide raw material or the sulfide raw material. When the M raw material is the non-sulfide raw material, the M raw material is at least one of element M as an elemental substance, a compound of lithium and element M, a compound of element M and phosphorus, and a compound of lithium, element M, and phosphorus. When the M raw material is the sulfide raw material, the M raw material is at least one of a compound of element M and sulfur (e.g., SiS, $SiS_2$, GeS, $GeS_2$, SnS, $SnS_2$, etc.), a compound of lithium, element M, and sulfur, a compound of element M, phosphorus, and sulfur (e.g., SiP, GeP, $Sn_3P_4$, etc.), and a compound of lithium, element M, phosphorus, and sulfur.

(P Raw Material)

The P raw material may be the non-sulfide raw material or the sulfide raw material. When the P raw material is the non-sulfide raw material, the P raw material is at least one of phosphorus as an elemental substance, a compound of lithium and phosphorus, a compound of element M and phosphorus, and a compound of lithium, element M, and phosphorus. When the P raw material is the sulfide raw material, the P raw material is at least one of a compound of phosphorus and sulfur (phosphorus sulfide), a compound of lithium, phosphorus, and sulfur (e.g., $Li_3PS_4$), a compound of element M, phosphorus, and sulfur, and a compound of lithium, element M, phosphorus, and sulfur.

(S Raw Material)

The S raw material is elemental sulfur, as described above.

(Mixing Method)

The mixing method of the raw materials will now be described. At the preparation step, the raw materials (Li raw material, M raw material, P raw material, and S raw material) are weighed at a weight ratio that makes a composition of the solid electrolyte member to be produced, and used as starting materials A, and the starting materials A are mixed to make an aggregate of starting materials A.

In the present embodiment, the Li raw material, the M raw material, the P raw material, and the S raw material are weighed and mixed in a glove box in an argon atmosphere. However, the present invention is not limited thereto and they may be mixed, for example, in an inert gas atmosphere such as nitrogen. In the present embodiment, the mixed Li raw material, M raw material, P raw material, and S raw material are pressed together and shaped into pellets, but the present invention is not limited to shaping into pellets.

At the preparation step, the raw materials (Li raw material, M raw material, P raw material, and S raw material) weighed as starting materials A are mixed to make an aggregate of starting materials A. As used herein mixing refers to stirring to the extent that the raw materials are dispersed homogeneously, and does not involve mechanical or chemical change of the raw materials as in a mechanical milling process. Therefore, when the aggregate of starting materials A formed by the present production method is measured by an X-ray diffraction method using a CuKa ray, the crystalline peaks of crystalline substances that constitute the starting materials A are detected, and no other crystalline peaks are detected. When the aggregate of starting materials A formed by the present production method is measured by the X-ray diffraction method using a CuKa ray, the crystalline peaks of crystalline substances contained in the elemental sulfur, the non-sulfide raw material, and the sulfide raw material are detected in the elemental sulfur, the non-sulfide raw material, and the sulfide raw material. When the starting materials A do not include the sulfide raw material, it can be said that the crystalline peaks of crystalline substances contained in the elemental sulfur and the non-sulfide raw material are detected in the elemental sulfur and the non-sulfide raw material.

For example, when $Li_2S$, metal Ge (elemental Ge), elemental P, and elemental S are used as the Li raw material, the M raw material, the P raw material, and the S raw material, and the aggregate of starting materials A formed by the present production method is measured by the X-ray diffraction method using a CuKa ray, the peaks of the following equations (1) to (6) are detected as crystalline peaks. As used herein the crystalline peak refers to a peak whose intensity is equal to or greater than a threshold value, where the threshold value is, for example, a relative intensity of 5 when the maximum peak intensity of the measurement result is 100.

$$2\theta = 23.06 \pm 0.50 \quad \ldots \quad (1)$$

$$2\theta = 27.00 \pm 0.50 \quad \ldots \quad (2)$$

$$2\theta = 27.46 \pm 0.50 \quad \ldots \quad (3)$$

$$2\theta = 27.71 \pm 0.50 \quad \ldots \quad (4)$$

$$2\theta = 44.81 \pm 0.50 \quad \ldots \quad (5)$$

$$2\theta = 45.61 \pm 0.50 \quad \ldots \quad (6)$$

At the preparation step, the mixing conditions of the raw materials are set such that the mixing time is 10 minutes or shorter and the upper limit of the load per unit area applied in the shear direction is 0.1 $N/mm^2$ or less, whereby the crystalline peak of each raw material can be detected appropriately in the formed starting materials A.

As illustrated in FIG. 1, after an aggregate of starting materials A is prepared at the preparation step, a forming step of heating the aggregate of starting materials A to form a solid electrolyte member is performed (step S12; forming step). In other words, before the forming step, the Li raw material, the M raw material, the P raw material, and the S raw material included in the starting materials A are not bonded to each other by a chemical reaction, but at the forming step, they are bonded by a chemical reaction to form a solid electrolyte member represented by a chemical formula $Li_aM_bP_cS_d$.

Specifically, at the forming step, the starting materials A are heated to temperature T1 and held at temperature T1 for a predetermined holding time to form a solid electrolyte member.

Temperature T1 is preferably 400°C or higher and 1000°C or lower, more preferably 500ºC or higher and 600ºC or lower, and even more preferably 500°C or higher and 560°C or lower. With temperature T1 set in this numerical range, the liquefied elemental sulfur bonds to the raw materials other than S by a chemical reaction to form a solid electrolyte member appropriately.

The holding time at temperature T1 is preferably 1 hour or longer and 72 hours or shorter, more preferably 1 hour or longer and 24 hours or shorter, and even more preferably 1 hour or longer and 12 hours or shorter. With the holding time set in this numerical range, the raw materials can react appropriately to form a solid electrolyte member appropriately.

FIG. 2 is a schematic diagram of a facility for forming the solid electrolyte member. As illustrated in FIG. 2, the furnace 10 is a furnace for heating the starting materials A to form a solid electrolyte member. The furnace 10 has a heater 12. The heater 12 is a heat source that heats the inside of the furnace 10. The structure in FIG. 2 is an example, and the facility for forming a solid electrolyte member is not limited to the structure in FIG. 2.

At the forming step, the starting materials A are placed in the furnace 10 in a predetermined gas atmosphere, and the furnace 10 is sealed. The inside of the furnace 10 in which the starting materials A are placed is then heated by the heater 12 to reach temperature T1, and is held at temperature T1 for a predetermined holding time. The gas filled in the furnace 10 may be any gas, and may be an inert gas (noble gas) such as argon, or hydrogen sulfide. It is not essential to seal the furnace. For example, the furnace may be heated while being supplied with a predetermined gas, without being sealed. For example, the furnace may be heated while being supplied with argon at 100 mL/min.

The elemental sulfur in the starting materials A melts and liquefies before it reaches temperature T1, and a solid-liquid reaction between the liquefied sulfur and the other raw materials forms a solid electrolyte member.

In this way, in the present production method, once the starting materials A are placed in the furnace 10, the solid electrolyte member is formed without removing the starting materials A from the furnace 10. In other words, in the present production method, the solid electrolyte member is formed while the sulfide (intermediate product) of Li, element M, and P formed from the starting materials A is held in the furnace 10, that is, not removed to the outside from the furnace 10. In other words, the sulfide (intermediate product) of Li, element M, and P formed from the starting materials A reacts while being kept sealed in the furnace 10 in a predetermined gas atmosphere without being exposed to the air, resulting in a solid electrolyte member.

In the present embodiment, heating at temperature T1 only in one stage is performed at the forming step, but heating may be performed in multiple stages. In this case, for example, a process of heating at temperature T2 for a predetermined time and melting elemental sulfur may be performed before heating at temperature T1. The process of heating at temperature T2 enables calcination at temperature T1 while ensuring that elemental sulfur is liquefied, so that the solid electrolyte member can be formed appropriately. Temperature T2 here is lower than temperature T1 and higher than the melting point of elemental sulfur and, for example, is 115°C or higher and 150°C or lower.

It is preferable that the solid electrolyte member produced by the method described above has a conductivity of 1 mS/cm or higher, and 3 mS/cm or higher is even more preferred. With a conductivity set within this numerical range, the performance as a solid electrolyte member can be maintained appropriately.

It is preferable that the solid electrolyte member produced by the method described above has peaks of the following equations (7) to (11) detected when measured by the X-ray diffraction method using a CuKa ray. In other words, the solid electrolyte member is preferably $Li_aM_bP_cS_d$ (more preferably $Li_{10}GeP_2S_{12}$) in which the peaks of the following equations (7) to (11) are detected.

$$2\theta = 17.38° \pm 1.0° \quad ... \quad (7)$$

$$2\theta = 20.18° \pm 1.0° \quad ... \quad (8)$$

$$2\theta = 20.44° \pm 1.0° \quad ... \quad (9)$$

$$2\theta = 26.96° \pm 1.0° \quad ... \quad (10)$$

$$2\theta = 29.58° \pm 1.0° \quad ... \quad (11)$$

As explained above, the method of producing a solid electrolyte member according to the present embodiment is a method of producing a solid electrolyte member based on sulfide. The method includes a preparation step of preparing an aggregate of starting materials A, in which the starting materials A include elemental sulfur and a non-sulfide raw material, and a forming step of heating the aggregate of starting materials A to form the solid electrolyte member. The non-sulfide raw material is at least one of an element as an elemental substance other than sulfur that constitutes the solid electrolyte member and a compound of elements other than sulfur that constitute the solid electrolyte member. The non-sulfide raw material contains no elements other than elements except sulfur that constitute the solid electrolyte member, except inevitable impurities.

In the present production method, since the aggregate of starting materials A contains the elemental sulfur and the non-sulfide raw material, the kinds and amount of sulfides contained in the raw materials can be reduced, and generation of hydrogen sulfide by a reaction of the starting materials A with moisture in the air can be suppressed. According to the present production method, therefore, the starting materials A can be easy to handle and store, and the solid electrolyte member can be produced appropriately.

According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

At the preparation step, it is preferable that the starting materials A are formed by mixing the elemental sulfur and the non-sulfide raw material such that a crystalline peak of a crystalline substance in the elemental sulfur and the non-sulfide raw material is detected when the aggregate of starting materials A formed is measured by an X-ray diffraction method. According to the present production method, since the solid electrolyte member is produced by a solid-liquid reaction, the solid electrolyte member can be produced appropriately by mixing to the extent that crystals remain. According to the present production method, therefore, a large number of solid electrolyte members can be produced in a short time with a simplified mixing step.

At the preparation step, it is preferable that all elements other than sulfur that constitute the solid electrolyte member are included in the non-sulfide raw material, and the aggregate of starting materials A is formed using only the elemental sulfur and the non-sulfide raw material as the starting materials A, except inevitable impurities. Since all the elements other than sulfur that constitute the solid electrolyte member are included in the non-sulfide raw material, the starting materials A can be easy to handle and store without using sulfide, and the solid electrolyte member can be produced more appropriately.

At the preparation step, the elemental sulfur, the non-sulfide raw material, and a sulfide raw material that is a sulfide of an element other than elements contained in the non-sulfide raw material are used as the starting materials A. Even when the sulfide raw material is used as a supply source of some of the elements that constitute the solid electrolyte member, the elemental sulfur and the non-sulfide raw material are used as a supply source of the other elements, whereby the kinds and amount of sulfides used as raw materials can be reduced, the starting materials A are easy to handle and store, and the solid electrolyte member can be produced appropriately.

At the forming step, it is preferable that the starting materials A are heated at heating temperatures of 400°C or higher and 1000°C or lower. The starting materials A are heated in this temperature range, whereby the solid electrolyte member can be produced appropriately.

It is preferable that the solid electrolyte member is represented by $Li_aM_bP_cS_d$, and the non-sulfide raw material is at least one of Li as an elemental substance, M as an elemental substance, P as an elemental substance, and a compound containing at least two selected from Li, element M, and P. Herein, element M is at least one element of groups 13, 14, and 15, and a, b, c, and d are numbers greater than 0. It is preferable that element M is at least one element of Si, Ge, and Sn. According to the present production method, $Li_aM_bP_cS_d$, which is a solid electrolyte member, can be produced appropriately.

In the first embodiment, a solid electrolyte member represented by a chemical formula $Li_aM_bP_cS_d$ is produced, but the solid electrolyte member that can be produced by the production method of the present disclosure is not limited to $Li_aM_bP_cS_d$. Examples of the solid electrolyte member other than $Li_aM_bP_cS_d$ are described in the following embodiments.

(Second Embodiment)

A second embodiment differs from the first embodiment in that a solid electrolyte member represented by a chemical formula $Li_aM_bP_cS_dHa_e$ is produced. In the second embodiment, the sections having the same configuration as the first embodiment will not be further elaborated.

The solid electrolyte member produced in the second embodiment is represented by a chemical formula $Li_aM_bP_cS_dHa_e$. Herein, a, b, c, d, and e are numbers greater than 0.

Element Ha is a halogen element, more preferably at least one of F, Cl, Br, and I.

It is preferable that the solid electrolyte member produced in the second embodiment has a peak detected at the position of the following equation (12) when measured by the X-ray diffraction method using a CuKa ray.

$$2\theta=29.58°\pm0.50° \quad ... \quad (12)$$

The solid electrolyte member produced in the second embodiment may have or may not have a peak detected at the position of the following equation (13) when measured by the X-ray diffraction method using a CuKa ray. In other words, in the second embodiment, a solid electrolyte member having a peak detected at the position of equation (13) may be produced, or a solid electrolyte member having no peak detected at the position of equation (13) may be produced.

$$2\theta=27.33°\pm0.50° \quad ... \quad (13)$$

Herein, when the diffraction intensity of the peak at the position of equation (12) in the X-ray diffraction measurement using a CuKa ray is $I_A$, and the diffraction intensity at the position of equation (13) in the X-ray diffraction measurement using a CuKa ray is $I_B$ for the solid electrolyte member produced in the second embodiment, it is preferable that the value of $I_B/I_A$ is less than 0.50.

Even in the second embodiment, elemental sulfur, a non-sulfide raw material, and a sulfide raw material are the raw materials that constitute the starting materials A. Even in the second embodiment, the sulfide raw material is a sulfide of an element other than sulfur and the elements contained in the non-sulfide raw material, among the elements that constitute the solid electrolyte member (herein, lithium, element M, phosphorus, sulfur, and element Ha). However, the sulfide raw material is not essential as a raw material that constitutes the starting materials A.

In the second embodiment, it is preferable to use at least one of elemental lithium, element M as an elemental substance, phosphorus as an elemental substance, and a compound containing at least two selected from lithium, element M, phosphorus, and element Ha, as the non-sulfide raw material, and it is preferable that elements other than lithium, element M, phosphorus, and element Ha are not included, except inevitable impurities. When there are different kinds of elements Ha, each element Ha as an elemental substance may be prepared, or a compound of each element Ha or a compound of elements Ha may be prepared.

In the second embodiment, the solid electrolyte member may be produced in the same manner as in the first embodiment, except that the non-sulfide raw material is different from that of the first embodiment as described above.

As explained above, in the second embodiment, the solid electrolyte member produced is represented by $Li_aM_bP_cS_dHa_e$ and has a peak at the position $2\theta=29.58°\pm0.50°$ in the X-ray diffraction measurement using a CuKa ray, and the value of $I_B/I_A$ is less than 0.50. At least one of Li as an elemental substance, M as an elemental substance, P as an elemental substance, and a compound containing at least two selected from Li, M, P, and Ha is used as the non-sulfide raw material. Even in the second embodiment, since the aggregate of starting materials A contains the elemental sulfur and the non-sulfide raw material, the kinds and amount of sulfides contained in the raw materials can be reduced, the starting materials A can be easy to handle and store, and the solid electrolyte member can be produced appropriately. According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

(Third Embodiment)

A third embodiment differs from the first embodiment in that a solid electrolyte member represented by a chemical formula $Li_aM_bP_cX_dS_eHa_f$ is produced. In the third embodiment, the sections having the same configuration as the first embodiment will not be further elaborated.

The solid electrolyte member produced in the third embodiment is represented by a chemical formula $Li_aM_bP_cX_dS_eHa_f$. Here, a, b, c, d, e, and f are numbers greater than 0.

Element Ha is a halogen element, more preferably at least one of F, Cl, Br, and I.

Element X is an element of group 16 other than S, more preferably at least one of O, Se, and Te.

It is preferable that the solid electrolyte member produced in the third embodiment has a peak detected at the position of Equation (12), in the same manner as the solid electrolyte member of the second embodiment. The solid electrolyte member produced in the third embodiment may or may not have a peak detected at the position of equation (13), in the same manner as the solid electrolyte member of the second embodiment. It is preferable that the value of $I_B/I_A$ in the solid electrolyte member produced in the third embodiment is less than 0.50, in the same manner as the solid electrolyte member of the second embodiment.

Even in the third embodiment, elemental sulfur, a non-sulfide raw material, and a sulfide raw material are the raw materials that constitute the starting materials A. Even in the third embodiment, the sulfide raw material is a sulfide of an element other than sulfur and the elements contained in the non-sulfide raw material, among the elements that constitute the solid electrolyte member (here, lithium, element M, phosphorus, sulfur, element X, and element Ha). However, the sulfide raw material is not essential as a raw material that constitutes the starting materials A.

In the third embodiment, it is preferable to use at least one of elemental lithium, element M as an elemental substance, phosphorus as an elemental substance, element X as an elemental substance, and a compound containing at least two selected from lithium, element M, phosphorus, element X, and element Ha, as the non-sulfide raw material, and it is preferable that elements other than lithium, element M, phosphorus, element X, and element Ha are not included, except inevitable impurities. When there are different kinds of elements Ha, each element Ha as an elemental substance may be prepared, or a compound of each element Ha or a compound of elements Ha may be prepared. When there are different kinds of elements X, each element X as an elemental substance may be prepared, or a compound of each element X or a compound of elements X may be prepared.

In the third embodiment, the solid electrolyte member may be produced in the same manner as in the first embodiment, except that the non-sulfide raw material is different from that of the first embodiment as described above.

As explained above, in the third embodiment, the solid electrolyte member produced is represented by $Li_aM_b P_cX_dS_eHa_f$ and has a peak at the position $2\theta=29.58°\pm0.50°$ in the X-ray diffraction measurement using a CuKa ray, and the value of $I_B/I_A$ is less than 0.50. At least one of Li as an elemental substance, M as an elemental substance, P as an elemental substance, X as an elemental substance, and a compound containing at least two selected from Li, M, P, X, and Ha is used as the non-sulfide raw material. Even in the third embodiment, since the aggregate of starting materials A contains the elemental sulfur and the non-sulfide raw material, the kinds and amount of sulfides contained in the raw materials can be reduced, the starting materials A can be easy to handle and store, and the solid electrolyte member can be produced appropriately. According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

(Another Example of Third Embodiment)

In the third embodiment, element Ha and element X are introduced to the solid electrolyte member of the first embodiment, but element X may be introduced without introducing element Ha. In other words, the solid electrolyte member may be represented by $Li_aM_bP_cX_dS_e$. In this case, a, b, c, d, and e are numbers greater than 0. In this example, it is preferable to use at least one of elemental lithium, element M as an elemental substance, phosphorus as an elemental substance, element X as an elemental substance, and a compound containing at least two selected from lithium, element M, phosphorus, and element X, as the non-sulfide raw material, and it is preferable that elements other than lithium, element M, phosphorus, and element X are not included, except inevitable impurities. In other respects, the description overlaps with that of the third embodiment and therefore will be omitted.

(Fourth Embodiment)

A fourth embodiment differs from the first embodiment in that a solid electrolyte member having a crystal phase of an argyrodite-type crystal structure and represented by a chemical formula $Li_aP_bS_cHa_d$ is produced. In the fourth embodiment, the sections having the same configuration as the first embodiment will not be further elaborated.

The solid electrolyte member produced in the fourth embodiment has a crystal phase of an argyrodite-type crystal structure and is represented by a chemical formula $Li_aP_bS_cHa_d$. Herein, a, b, c, and d are numbers greater than 0.

Element Ha is a halogen element, more preferably at least one of F, Cl, Br, and I.

Even in the fourth embodiment, elemental sulfur, a non-sulfide raw material, and a sulfide raw material are the raw materials that constitute the starting materials A. Even in the fourth embodiment, the sulfide raw material is a sulfide of an element other than sulfur and the elements contained in the non-sulfide raw material, among the elements that constitute the solid electrolyte member (here, lithium, phosphorus, sulfur, and element Ha). However, the sulfide raw material is not essential as a raw material that constitutes the starting materials A.

In the fourth embodiment, it is preferable to use at least one of elemental lithium, phosphorus as an elemental substance, and a compound containing at least two selected from lithium, phosphorus, and element Ha, as the non-sulfide raw material, and it is preferable that elements other than lithium, phosphorus, and element Ha are not included, except inevitable impurities. When there are different kinds of elements Ha, each element Ha as an elemental substance may be prepared, or a compound of each element Ha or a compound of elements Ha may be prepared.

In the fourth embodiment, the solid electrolyte member may be produced in the same manner as in the first embodiment, except that the non-sulfide raw material is different from that of the first embodiment as described above.

As explained above, in the fourth embodiment, the solid electrolyte member produced has a crystal phase of an argyrodite-type crystal structure and is represented by $Li_aP_bS_cHa_d$. At least one of Li as an elemental substance, P as an elemental substance, and a compound containing at least two selected from Li, P, and Ha is used as the non-sulfide raw material. Even in the fourth embodiment, since the aggregate of starting materials A contains the elemental sulfur and the non-sulfide raw material, the kinds and amount of sulfides contained in the raw materials can be reduced, the starting materials A can be easy to handle and store, and the solid electrolyte member can be produced appropriately. According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

(Fifth Embodiment)

A fifth embodiment differs from the first embodiment in that a solid electrolyte member having a crystal phase of an argyrodite-type crystal structure and represented by a chemical formula $Li_aP_bX_cS_dHa_e$ is produced. In the fifth embodiment, the sections having the same configuration as the first embodiment will not be further elaborated.

The solid electrolyte member produced in the fifth embodiment has a crystal phase of an argyrodite-type crystal structure and is represented by a chemical formula $Li_aP_bX_cS_dHa_e$. Herein, a, b, c, d, and e are numbers greater than 0.

Element Ha is a halogen element, more preferably at least one of F, Cl, Br, and I.

Element X is an element of group 16 other than S, more preferably at least one of O, Se, and Te.

Even in the fifth embodiment, elemental sulfur, a non-sulfide raw material, and a sulfide raw material are the raw materials that constitute the starting materials A. Even in the fifth embodiment, the sulfide raw material is a sulfide of an element other than sulfur and the elements contained in the non-sulfide raw material, among the elements that constitute the solid electrolyte member (here, lithium, phosphorus, sulfur, element X, and element Ha). However, the sulfide raw material is not essential as a raw material that constitutes the starting materials A.

In the fifth embodiment, it is preferable to use at least one of elemental lithium, phosphorus as an elemental substance, element X as an elemental substance, and a compound containing at least two selected from lithium, phosphorus, element X, and element Ha, as the non-sulfide raw material, and it is preferable that elements other than lithium, phosphorus, and element Ha are not included, except inevitable impurities. When there are different kinds of elements Ha, each element Ha as an elemental substance may be prepared, or a compound of each element Ha or a compound of elements Ha may be prepared. When there are different kinds of elements X, each element X as an elemental substance may be prepared, or a compound of each element X or a compound of elements X may be prepared.

In the fifth embodiment, the solid electrolyte member may be produced in the same manner as in the first embodiment, except that the non-sulfide raw material is different from that of the first embodiment as described above.

As explained above, in the fifth embodiment, the solid electrolyte member produced has a crystal phase of an argyrodite-type crystal structure and is represented by $Li_aP_bX_cS_dHa_e$. At least one of Li as an elemental substance, P as an elemental substance, X as an elemental substance, and a compound containing at least two selected from Li, P, X, and Ha is used as the non-sulfide raw material. Even in the fifth embodiment, since the aggregate of starting materials A contains the elemental sulfur and the non-sulfide raw material, the kinds and amount of sulfides contained in the raw materials can be reduced, the starting materials A can be easy to handle and store, and the solid electrolyte member can be produced appropriately. According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

(Sixth Embodiment)

A sixth embodiment differs from the first embodiment in that a solid electrolyte member having a crystal structure of space group Pnma, having peaks of the following equations (14) to (17) detected as crystalline peaks when measured by the X-ray diffraction method using a CuKa ray, and represented by a chemical formula $Li_aM_bS_c$ is produced. In the sixth embodiment, the sections having the same configuration as the first embodiment will not be further elaborated.

$$2\theta = 17.01 \pm 0.50 \quad \ldots \quad (14)$$

$$2\theta = 18.50 \pm 0.50 \quad \ldots \quad (15)$$

$$2\theta = 25.31 \pm 0.50 \quad \ldots \quad (16)$$

$$2\theta=26.23\pm0.50 \quad \ldots \quad (17)$$

The solid electrolyte member produced in the sixth embodiment is represented by a chemical formula $Li_aM_bS_c$. Here, a, b, and c are numbers greater than 0.

Even in the sixth embodiment, elemental sulfur, a non-sulfide raw material, and a sulfide raw material are the raw materials that constitute the starting materials A. Even in the sixth embodiment, the sulfide raw material is a sulfide of an element other than sulfur and the elements contained in the non-sulfide raw material, among the elements that constitute the solid electrolyte member (here, lithium, element M, and sulfur). However, the sulfide raw material is not essential as a raw material that constitutes the starting materials A.

In the sixth embodiment, it is preferable to use at least one of elemental lithium, element M as an elemental substance, and a compound containing at least two selected from lithium and element M, as the non-sulfide raw material, and it is preferable that elements other than lithium and elemental M are not included, except inevitable impurities.

In the sixth embodiment, the solid electrolyte member may be produced in the same manner as in the first embodiment, except that the non-sulfide raw material is different from that of the first embodiment as described above.

As explained above, in the sixth embodiment, the solid electrolyte member produced is represented by $Li_aM_bS_c$. At least one of Li as an elemental substance, M as an elemental substance, and a compound containing Li and M is used as the non-sulfide raw material. Even in the sixth embodiment, since the aggregate of starting materials A contains the elemental sulfur and the non-sulfide raw material, the kinds and amount of sulfides contained in the raw materials can be reduced, the starting materials A can be easy to handle and store, and the solid electrolyte member can be produced appropriately. According to the present production method, since elemental sulfur with a low melting point is used, the solid electrolyte member can be synthesized by a solid-liquid reaction and mechanical milling is unnecessary. According to the present production method, therefore, a large number of solid electrolyte members can be produced in a short time.

(Examples)

Examples will now be described. In Examples, solid electrolyte members were formed using different kinds of starting materials A, and conductivity was measured as the performance of the solid electrolyte members. Table 1 lists the kinds of raw materials in Examples 1 to 8.

Table 1

| | Starting materials | | | | | | | | Calcination conditions | | | Conductivity (mS/cm) |
|---|---|---|---|---|---|---|---|---|---|---|---|---|
| | Li raw material | Amount blended (g) | M raw material | Amount blended (g) | P raw material | Amount blended (g) | S raw material | Amount blended (g) | Atmosphere | Temperature | Holding time | |
| Example 1 | Li | 0.22 | Sn | 0.37 | P | 0.20 | S | 1.21 | Ar | 560°C | 6h | 3.4 |
| Example 2 | Li | 0.22 | $SnS_2$ | 0.58 | $P_2S_5$ | 0.70 | S | 0.50 | Ar | 560°C | 6h | 2.6 |
| Example 3 | $Li_2S$ | 0.72 | Sn | 0.37 | $P_2S_5$ | 0.70 | S | 0.21 | Ar | 560°C | 6h | 3.7 |
| Example 4 | $Li_2S$ | 0.72 | $SnS_2$ | 0.58 | P | 0.20 | S | 0.70 | Ar | 560°C | 6h | 2.7 |
| Example 5 | $Li_2S$ | 0.72 | Sn | 0.37 | P | 0.20 | S | 0.71 | Ar | 560°C | 6h | 4.1 |
| Example 6 | $Li_2S$ | 0.72 | Sn | 0.37 | P | 0.20 | S | 0.71 | $H_2S$ | 560°C | 6h | 5.6 |
| Example 7 | $Li_2S$ | 0.84 | Si | 0.10 | P | 0.23 | S | 0.83 | Ar | 560°C | 6h | 6.1 |
| Example 8 | $Li_2S$ | 0.78 | Ge | 0.25 | P | 0.21 | S | 0.76 | Ar | 560°C | 6h | 11.0 |

(Example 1)

In Example 1, elemental lithium that is a non-sulfide raw material was used as the Li raw material, elemental tin that is a non-sulfide raw material was used as the M raw material, elemental phosphorus that is a non-sulfide raw material was used as the P raw material, and elemental sulfur was used as the S raw material. In Example 1, in a glove box with a dew point of -70°C or lower in an argon atmosphere, elemental lithium, elemental tin, elemental phosphorus, and elemental sulfur were weighed to make a desired composition in the air, mixed in an agate mortar for 5 minutes to the extent that the color became uniform, and shaped into pellets to form a set of starting materials. Herein, 0.22 g of elemental lithium, 0.37 g of elemental tin, 0.20 g of elemental phosphorus, and 1.21 g of elemental sulfur were mixed. The starting materials were then installed in a furnace, and the inside of the furnace was heated in an argon atmosphere and held at 560°C. The holding time herein was six hours. Then, the inside of the furnace was cooled at 1 °C/min, resulting in a solid electrolyte member.

(Example 2)

In Example 2, elemental lithium that is a non-sulfide raw material was used as the Li raw material, tin sulfide that is a sulfide raw material was used as the M raw material, phosphorus sulfide that is a sulfide raw material was used as the P raw material, and elemental sulfur was used as the S raw material. Herein, 0.22 g of elemental lithium, 0.58 g of tin sulfide, 0.70 g of phosphorus sulfide, and 0.50 g of elemental sulfur were mixed. The other production conditions are the same as those in Example 1.

(Example 3)

In Example 3, lithium sulfide that is a sulfide raw material was used as the Li raw material, elemental tin that is a non-sulfide raw material was used as the M raw material, phosphorus sulfide that is a sulfide raw material was used as the P raw material, and elemental sulfur was used as the S raw material. Herein, 0.72 g of lithium sulfide, 0.37 g of elemental tin, 0.70 g of phosphorus sulfide, and 0.21 g of elemental sulfur were mixed. The other production conditions are the same as those in Example 1.

(Example 4)

In Example 4, lithium sulfide that is a sulfide raw material was used as the Li raw material, tin sulfide that is a sulfide raw material was used as the M raw material, elemental phosphorus that is a non-sulfide raw material was used as the P raw material, and elemental sulfur was used as the S raw material. Herein, 0.72 g of lithium sulfide, 0.58 g of tin sulfide, 0.20 g of elemental phosphorus, and 0.70 g of elemental sulfur were mixed. The other production conditions are the same as those in Example 1.

(Example 5)

In Example 5, lithium sulfide that is a sulfide raw material was used as the Li raw material, elemental tin that is a non-sulfide raw material was used as the M raw material, elemental phosphorus that is a non-sulfide raw material was used as the P raw material, and elemental sulfur was used as the S raw material. Herein, 0.72 g of lithium sulfide, 0.37 g of elemental tin, 0.20 g of elemental phosphorus, and 0.71 g of elemental sulfur were mixed. The other production conditions are the same as those in Example 1.

(Example 6)

In Example 6, lithium sulfide that is a sulfide raw material was used as the Li raw material, elemental tin that is a non-sulfide raw material was used as the M raw material, elemental phosphorus that is a non-sulfide raw material was used as the P raw material, and elemental sulfur was used as the S raw material. Herein, 0.72 g of lithium sulfide, 0.37 g of elemental tin, 0.20 g of elemental phosphorus, and 0.71 g of elemental sulfur were mixed. The atmosphere in which the inside of the furnace was heated at 560°C was a hydrogen sulfide atmosphere. The other production conditions are the same as those in Example 1.

(Example 7)

In Example 7, lithium sulfide that is a sulfide raw material was used as the Li raw material, elemental silicon that is a non-sulfide raw material was used as the M raw material, elemental phosphorus that is a non-sulfide raw material was used as the P raw material, and elemental sulfur was used as the S raw material. Herein, 0.84 g of lithium sulfide, 0.10 g of elemental silicon, 0.23 g of elemental phosphorus, and 0.83 g of elemental sulfur were mixed. The other production conditions are the same as those in Example 1.

(Example 8)

In Example 8, lithium sulfide that is a sulfide raw material was used as the Li raw material, elemental germanium that is a non-sulfide raw material was used as the M raw material, elemental phosphorus that is a non-sulfide raw material was used as the P raw material, and elemental sulfur was used as the S raw material. Herein, 0.78 g of lithium sulfide, 0.25 g of elemental germanium, 0.21 g of elemental phosphorus, and 0.76 g of elemental sulfur were mixed. The other production conditions are the same as those in Example 1. The solid electrolyte members in Examples 1 to 8 correspond to the solid electrolyte members represented by $Li_aM_bP_cS_d$ of the first embodiment.

Table 2 lists the kinds of raw materials in Examples 9 to 13.

Table 2

| | Starting materials | | | | | | | | | | | | Calcination conditions | | | Conductivity (mS/cm) |
| | Elemental sulfur | | Non-sulfide raw material | | | | | | | | | Sulfide raw material | | | | | |
| | Raw material | Amount blended (g) | Raw material | Amount blended (g) | Raw material | Amount blended (g) | Raw material | Amount blended (g) | Raw material | Amount blended (g) | Raw material | Amount blended (g) | Atmosphere | Temperature | Holding time | |
|---|---|---|---|---|---|---|---|---|---|---|---|---|---|---|---|---|
| Example 9 | S | 0.83 | Si | 0.18 | P | 0.16 | LiCl | 0.05 | | | Li$_2$S | 0.78 | Ar | 560°C | 6h | 6.3 |
| Example 10 | S | 0.79 | Si | 0.17 | P | 0.16 | LiCl | 0.04 | Li$_2$Te | 0.15 | Li$_2$S | 0.69 | Ar | 560°C | 6h | 6.3 |
| Example 11 | S | 0.60 | P | 0.23 | LiCl | 0.32 | | | | | Li$_2$S | 0.86 | Ar | 560°C | 6h | 1.7 |
| Example 12 | S | 0.57 | P | 0.22 | LiCl | 0.23 | Li$_2$Te | 0.13 | | | Li$_2$S | 0.86 | Ar | 560°C | 6h | 4.1 |
| Example 13 | S | 0.50 | Sn | 0.74 | As | 0.09 | | | | | Li$_2$S | 0.66 | Ar | 560°C | 6h | 1.4 |

(Example 9)

In Example 9, elemental silicon, elemental phosphorus, and lithium chloride were used as a non-sulfide raw material, lithium sulfide was used as a sulfide raw material, and elemental sulfur was further used. In Example 9, in a glove box with a dew point of -70°C or lower in an argon atmosphere, elemental silicon, elemental phosphorus, lithium chloride, lithium sulfide, and elemental sulfur were weighed to make a desired composition in the air, mixed in an agate mortar for 5 minutes to the extent that the color became uniform, and shaped into pellets to form a set of starting materials. Herein, 0.83 g of elemental sulfur, 0.18 g of elemental silicon, 0.16 g of elemental phosphorus, 0.05 g of lithium chloride, and 0.78 g of lithium sulfide were mixed and used as starting materials. The starting materials were then installed in a furnace, and the inside of the furnace was heated in an argon atmosphere and held at 560°C. The holding time herein was six hours. Then, the inside of the furnace was cooled at 1 °C/min, resulting in a solid electrolyte member. The solid electrolyte member in Example 9 corresponds to the solid electrolyte member represented by $Li_aM_bP_cS_dHa_e$ in the example of the second embodiment.

(Example 10)

In Example 10, elemental silicon, elemental phosphorus, lithium chloride, and lithium telluride were used as a non-sulfide raw material, lithium sulfide was used as a sulfide raw material, and elemental sulfur was further used. Herein, 0.79 g of elemental sulfur, 0.17 g of elemental silicon, 0.16 g of elemental phosphorus, 0.04 g of lithium chloride, 0.15 g of lithium telluride, and 0.69 g of lithium sulfide were mixed and used as starting materials. The other production conditions are the same as those in Example 9. The solid electrolyte member in Example 10 corresponds to the solid electrolyte member represented by $Li_aM_bP_cX_dS_e$ in another example of the third embodiment.

(Example 11)

In Example 11, elemental phosphorus and lithium chloride were used as a non-sulfide raw material, lithium sulfide was used as a sulfide raw material, and elemental sulfur was further used. Herein, 0.60 g of elemental sulfur, 0.23 g of elemental phosphorus, 0.32 g of lithium chloride, and 0.86 g of lithium sulfide were mixed and used as starting materials. The other production conditions are the same as those in Example 10. The solid electrolyte member in Example 11 corresponds to the solid electrolyte member represented by $Li_aP_bS_cHa_d$ in the fourth embodiment.

(Example 12)

In Example 12, elemental phosphorus, lithium chloride, and lithium telluride were used as a non-sulfide raw material, lithium sulfide was used as a sulfide raw material, and elemental sulfur was further used. Herein, 0.57 g of elemental sulfur, 0.22 g of elemental phosphorus, 0.23 g of lithium chloride, 0.13 g of lithium telluride, and 0.86 g of lithium sulfide were mixed and used as starting materials. The other production conditions are the same as those in Example 10. The solid electrolyte member in Example 12 corresponds to the solid electrolyte member represented by $Li_aP_bX_cS_dHa_e$ in the fifth embodiment.

(Example 13)

In Example 13, elemental tin and elemental arsenic were used as a non-sulfide raw material, lithium sulfide was used as a sulfide raw material, and elemental sulfur was further used. Herein, 0.50 g of elemental sulfur, 0.74 g of elemental tin, 0.09 g of elemental arsenic, and 0.66 g of lithium sulfide were mixed and used as starting materials. The other production conditions are the same as those in Example 10. The solid electrolyte member in Example 13 corresponds to the solid electrolyte member represented by $Li_aM_bX_cS_d$ in the six embodiment using two kinds of M elements.

Table 3

| | Sulfide raw material | | | | | | Calcination conditions | | | Conductivity (mS/cm) |
|---|---|---|---|---|---|---|---|---|---|---|
| | Raw material | Amount blended (g) | Raw material | Amount blended (g) | Raw material | Amount blended (g) | Atmosphere | Temperature | Holding time | |
| Comparative Example 1 | $Li_2S$ | 0.72 | $SnS_2$ | 0.58 | $P_2S_5$ | 0.70 | Ar | 560°C | 6h | 2.6 |
| Comparative Example 2 (Starting materials subjected to mechanical milling) | $Li_2S$ | 0.72 | $SnS_2$ | 0.58 | $P_2S_5$ | 0.70 | Ar | 560°C | 6h | 4.0 |

Table 3 lists the kinds of raw materials in Comparative Examples 1 and 2.

(Comparison Example 1)

In Comparative Example 1, a non-sulfide raw material and elemental sulfur were not used as raw materials, lithium sulfide that is a sulfide raw material was used, and only tin sulfide and phosphorus sulfide were used. Herein, 0.72 g of lithium sulfide, 0.58 g of tin sulfide, and 0.70 g of phosphorus sulfide were mixed. The other production conditions are the same as those in Example 1.

(Comparison Example 2)

In Comparative Example 2, a non-sulfide raw material and elemental sulfur were not used as raw materials, lithium sulfide that is a sulfide raw material was used, and only tin sulfide and phosphorus sulfide were used. Herein, 0.72 g of lithium sulfide, 0.58 g of tin sulfide, and 0.70 g of phosphorus sulfide were mixed. As the mixing conditions, mechanical milling was performed for 24 hours at 400 rpm using a planetary ball mill. The other production conditions are the same as those in Comparison Example 1.

(Measurement Results)

The solid electrolyte member produced as described above was removed in the glove box in an argon atmosphere and crushed in an agate mortar. Using a conductivity measurement cell made of SUS, the conductivity was measured by measuring AC impedance with a potentiostat/galvanostat SP-300 from BioLogic Science Instruments. As the measurement conditions, a pressure of 360 MPa was applied to a specimen with a filling amount of 0.3 g at 25°C in a measurement range of 1 Hz to 1 MHz. The measurement results of the conductivity are listed in Tables 1 and 2.

As listed in Tables 1 and 2, the conductivity in Examples was 1 mS/cm or higher, suggesting that a solid electrolyte member with an appropriate conductivity can be produced even when the starting materials include elemental sulfur and a non-sulfide raw material. The use of the non-sulfide raw material can reduce the kinds and amount of sulfides contained in the raw materials and eliminate the difficulty of handling the starting materials. On the other hand, in Comparative Examples, since the non-sulfide raw material is not used, the kinds and amount of sulfides contained in the raw materials fail to be reduced, and the difficulty of handling the starting materials fails to be eliminated. The sulfides each react with moisture in the air to produce hydrogen sulfide and therefore are difficult to handle as a raw material. Reducing the kinds of sulfides used is also advantageous in production. For example, Comparative Examples use three kinds of sulfide raw materials (sulfides other than elemental sulfur), whereas Example 1 uses no sulfide raw materials, Examples 2 to 4 use two kinds of sulfide raw materials, and Examples 5 to 13 use one kind of sulfide raw material. Examples are therefore more advantageous in production.

Although the embodiments of the present invention have been described above, the embodiments are not limited by the contents of the embodiments. The constituent elements described above include those easily conceivable by those skilled in the art, those substantially identical, and those in the range of equivalents. Furthermore, the constituent elements described above can be combined as appropriate. Furthermore, various omissions, substitutions, or modifications of the constituent elements described above can be made without departing from the spirit of the foregoing embodiments.

Reference Signs List

10 furnace
12 heater
A starting materials
S10 preparation step
S12 forming step

**Claims**

1. A method of producing a solid electrolyte member based on sulfide, the method comprising:

   a preparation step of preparing an aggregate of starting materials, the starting materials including elemental sulfur, and a non-sulfide raw material that is at least one of an element as an elemental substance other than sulfur that constitutes the solid electrolyte member, and a compound of elements other than sulfur that constitute the solid electrolyte member; and

a forming step of heating the aggregate of starting materials to form the solid electrolyte member, wherein the non-sulfide raw material contains no elements other than elements except sulfur that constitute the solid electrolyte member, except inevitable impurities.

2. The method of producing a solid electrolyte member according to claim 1, wherein
at the preparation step,

all elements other than sulfur that constitute the solid electrolyte member are included in the non-sulfide raw material, and
the aggregate of starting materials is formed using only the elemental sulfur and the non-sulfide raw material as the starting materials, except inevitable impurities.

3. The method of producing a solid electrolyte member according to claim 1 or 2, wherein

at the preparation step,

the elemental sulfur,
the non-sulfide raw material, and
a sulfide raw material that is a sulfide of an element other than elements contained in the non-sulfide raw material

are used as the starting materials.

4. The method of producing a solid electrolyte member according to any one of claims 1 to 3, wherein at the forming step, the starting materials are heated at heating temperatures of 400°C or higher and 1000°C or lower.

5. The method of producing a solid electrolyte member according to any one of claims 1 to 4, wherein

the solid electrolyte member is represented by $Li_aM_bP_cS_d$, and
the non-sulfide raw material is at least one of Li as an elemental substance, M as an elemental substance, P as an elemental substance, and a compound containing at least two selected from Li, M, and P,
where M is at least one element of groups 13, 14, and 15, and a, b, c, and d are numbers greater than 0.

6. The method of producing a solid electrolyte member according to any one of claims 1 to 4, wherein

the solid electrolyte member

is represented by $Li_aM_bP_cS_dHa_e$, and
has a peak at a position of $2\theta=29.58°\pm0.50°$ in X-ray diffraction measurement using a CuKa ray,

when a diffraction intensity of the peak at the position of $2\theta=29.58°\pm0.50°$ in X-ray diffraction measurement using a CuKa ray is $I_A$, and a diffraction intensity at $2\theta=27.33°\pm0.50°$ in X-ray diffraction measurement using a CuKa ray is $I_B$, a value of $I_B/I_A$ is less than 0.50, and
the non-sulfide raw material is at least one of Li as an elemental substance, M as an elemental substance, P as an elemental substance, and a compound containing at least two selected from Li, M, P, and Ha,
where M is at least one element of groups 13, 14, and 15, Ha is at least one element of F, Cl, Br, and I, and a, b, c, d, and e are numbers greater than 0.

7. The method of producing a solid electrolyte member according to any one of claims 1 to 4, wherein

the solid electrolyte member

is represented by $Li_aM_bP_cX_dS_eHa_f$, and
has a peak at a position of $2\theta=29.58°\pm0.50°$ in X-ray diffraction measurement using a CuKa ray,

when a diffraction intensity of the peak at the position of $2\theta=29.58°\pm0.50°$ in X-ray diffraction measurement using a CuKa ray is $I_A$, and a diffraction intensity at $2\theta=27.33°\pm0.50°$ in X-ray diffraction measurement using a CuKa ray is $I_B$, a value of $I_B/I_A$ is less than 0.50, and
the non-sulfide raw material is at least one of Li as an elemental substance, M as an elemental substance, P as an elemental substance, X as an elemental substance, and a compound containing at least two selected from Li, M, P, X, and Ha,
where M is at least one element of groups 13, 14, and 15, X is at least one element of O, Se, and Te, Ha is at least one element of F, Cl, Br, and I, and a, b, c, d, e, and f are numbers greater than 0.

8. The method of producing a solid electrolyte member according to any one of claims 5 to 7, wherein M is at least one element of Si, Ge, and Sn.

9. The method of producing a solid electrolyte member according to any one of claims 1 to 4, wherein

   the solid electrolyte member has a crystal phase of an argyrodite-type crystal structure and is represented by $Li_aP_bS_cHa_d$, and
   the non-sulfide raw material is at least one of Li as an elemental substance, P as an elemental substance, and a compound containing at least two selected from Li, P, and Ha,
   where Ha is at least one element of F, Cl, Br, and I, and a, b, c, and d are numbers greater than 0.

10. The method of producing a solid electrolyte member according to any one of claims 1 to 4, wherein

    the solid electrolyte member has a crystal phase of an argyrodite-type crystal structure and is represented by $Li_aP_bX_cS_dHa_e$, and
    the non-sulfide raw material is at least one of Li as an elemental substance, P as an elemental substance, X as an elemental substance, and a compound containing at least two selected from Li, P, X, and Ha,
    where X is at least one element of O, Se, and Te, Ha is at least one element of F, Cl, Br, and I, and a, b, c, and d are numbers greater than 0.

11. The method of producing a solid electrolyte member according to any one of claims 1 to 4, wherein the solid electrolyte member is represented by $Li_aM_bS_c$, has a crystal structure of space group Pnma, and has peaks of the following equations (1) to (4) detected as crystalline peaks when measured by an X-ray diffraction method using a CuKα ray, and the non-sulfide raw material is at least one of Li as an elemental substance, M as an elemental substance, and a compound containing Li and M:

$$2\theta=17.01\pm0.50 \ \ldots \ (1)$$

$$2\theta=18.50\pm0.50 \ \ldots \ (2)$$

$$2\theta=25.31\pm0.50 \ \ldots \ (3)$$

$$2\theta=26.23\pm0.50 \ \ldots \ (4)$$

where M is at least one element of groups 13, 14, and 15, and a, b, and c are numbers greater than 0.

12. The method of producing a solid electrolyte member according to any one of claims 1 to 11, wherein
    at the preparation step, the aggregate of starting materials is formed by mixing the elemental sulfur and the non-sulfide raw material such that a crystalline peak of a crystalline substance in the elemental sulfur and the non-sulfide raw material is detected when the aggregate of starting materials formed is measured by an X-ray diffraction method.

# FIG.1

```
         ┌──────────────┐
         │    START     │
         └──────────────┘
                │
                ▼
  ┌─────────────────────────────────┐
  │ AGGREGATE OF STARTING MATERIALS IS │  ～S10
  │    PREPARED (PREPARATION STEP)      │
  └─────────────────────────────────┘
                │
                ▼
  ┌─────────────────────────────────┐
  │ AGGREGATE OF STARTING MATERIALS IS │  ～S12
  │  HEATED TO FORM SOLID ELECTROLYTE  │
  │      MEMBER (FORMING STEP)         │
  └─────────────────────────────────┘
                │
                ▼
         ┌──────────────┐
         │     END      │
         └──────────────┘
```

# FIG.2

<div align="center">

**INTERNATIONAL SEARCH REPORT**

</div>

| | International application No. |
|---|---|
| | PCT/JP2021/023764 |

**A.    CLASSIFICATION OF SUBJECT MATTER**
C01B 25/14(2006.01)i; H01M 10/0562(2010.01)i; H01B 13/00(2006.01)i; H01M 6/18(2006.01)i
FI: H01B13/00 Z; H01M10/0562; C01B25/14; H01M6/18 A
According to International Patent Classification (IPC) or to both national classification and IPC

**B.    FIELDS SEARCHED**

Minimum documentation searched (classification system followed by classification symbols)
C01B25/14; H01M10/0562; H01B13/00; H01M6/18

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X<br>Y | JP 2010-540396 A (UNIVERSITÄT SIEGEN) 24 December 2010 (2010-12-24) paragraphs [0006], [0016], [0022], [0025] | 1, 3-5, 12<br>2, 6-11 |
| Y | JP 2019-114525 A (HYUNDAI MOTOR COMPANY) 11 July 2019 (2019-07-11) paragraphs [0036]-[0040] | 2, 9-11 |
| Y | WO 2019/239949 A1 (MITSUBISHI GAS CHEMICAL CO., INC.) 19 December 2019 (2019-12-19) paragraphs [0015]-[0017] | 6-8 |
| Y | JP 2019-186084 A (FURUKAWA CO., LTD.) 24 October 2019 (2019-10-24) paragraph [0022] | 11 |

☐    Further documents are listed in the continuation of Box C.          ☒    See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 September 2021 (10.09.2021) | 21 September 2021 (21.09.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2021/023764

| Patent Documents referred in the Report | Publication Date | Patent Family | Publication Date |
|---|---|---|---|
| JP 2010-540396 A | 24 Dec. 2010 | US 2010/0290969 A1 paragraphs [0009], [0025]-[0028], [0034], [0037] WO 2009/047254 A1 DE 102007048289 A1 CN 101821199 A | |
| JP 2019-114525 A | 11 Jul. 2019 | US 2019/0190007 A1 paragraphs [0048]- [0051] EP 3502051 A1 KR 10-2019-0074484 A CN 109942008 A | |
| WO 2019/239949 A1 | 19 Dec. 2019 | (Family: none) | |
| JP 2019-186084 A | 24 Oct. 2019 | (Family: none) | |

Form PCT/ISA/210 (patent family annex) (January 2015)

**REFERENCES CITED IN THE DESCRIPTION**

**Patent documents cited in the description**

- JP 2020027715 A